# EUROPEAN PATENT APPLICATION

(11) **EP 0 662 380 A2**
(43) Date of publication of application: **12.07.1995**
(21) Application number: 94309838.4
(22) Date of filing: 28.12.1994
(51) Int. Cl.: B29C 33/38

(54) **Mould for fibre-reinforced plastics**

(30) Priority: 28.12.1993 JP 350175/93
(71) Applicant: HONDA GIKEN KOGYO KABUSHIKI KAISHA, Minato-ku, Tokyo (JP)
(72) Inventor: Matsumoto, Keizo, Wako-shi, Saitama-ken (JP); Shiraishi, Koji, Wako-shi, Saitama-ken (JP); Nasu, Makoto, Wako-shi, Saitama-ken (JP); Kanno, Masaru, Wako-shi, Saitama-ken (JP)
(74) Representative: Piesold, Alexander J.

(57) **Abstract**

A fibre-reinforced plastic article-forming mould (10) having substantially the same thermal expansion coefficient as that of the fibre-reinforced plastic, at least a surface layer of the mould being fully fluid-tight, is produced by machining the surface of an easily machinable ceramic material (3') to a contour of the fibre-reinforced plastic article to be formed; impregnating the machined surface of the easily machinable ceramic material with a hardening resin; and hardening the hardening resin to turn the surface layer of the mould into a fully fluid-tight, dense layer (5).

## Description

The present invention relates to a mould for forming fibre-reinforced plastic articles, a master mould for use in the production of a forming mould and methods for producing such mould and master mould. In particular, the present invention relates to a mould and a master mould which comprise a ceramic material which can be easily machined, and methods for producing such a mould and master mould.

Since fibre-reinforced plastics are light in weight and have excellent mechanical strength, they are widely used for various structures, amongst other things. To form uniform fibre-reinforced plastics, a plurality of so-called prepregs, (pre-impregnated fibre mats) each composed of a fabric (cloth) of reinforcing fibres such as carbon fibres, etc. impregnated with a thermosetting resin, are usually laminated and pressed while being heated. In this case, if a mould for forming a fibre-reinforced plastic article does not have the same thermal expansion coefficient as that of the fibre-reinforced plastic article, the fibre-reinforced plastic article obtained through such a heating process will have a poor dimensional accuracy. Accordingly, it is common to produce both a mould and a fibre-reinforced plastic article by the same material.

A mould used for producing the fibre-reinforced plastic article-forming mould is generally called a master mould. This master mould should also have the same thermal expansion coefficient as that of the fibre-reinforced plastic article-forming mould. Accordingly, conventional master moulds are also made of fibre-reinforced plastics.

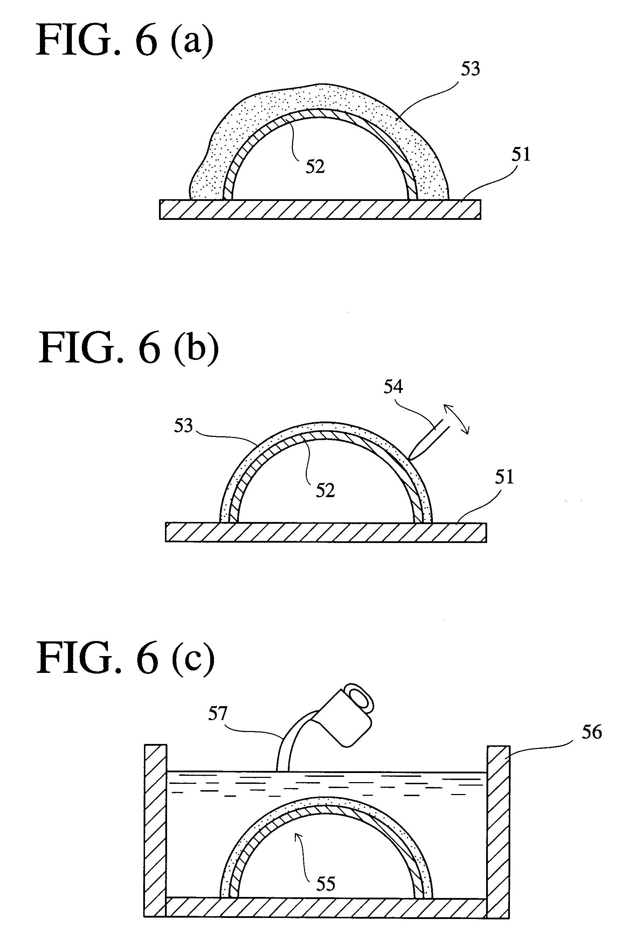

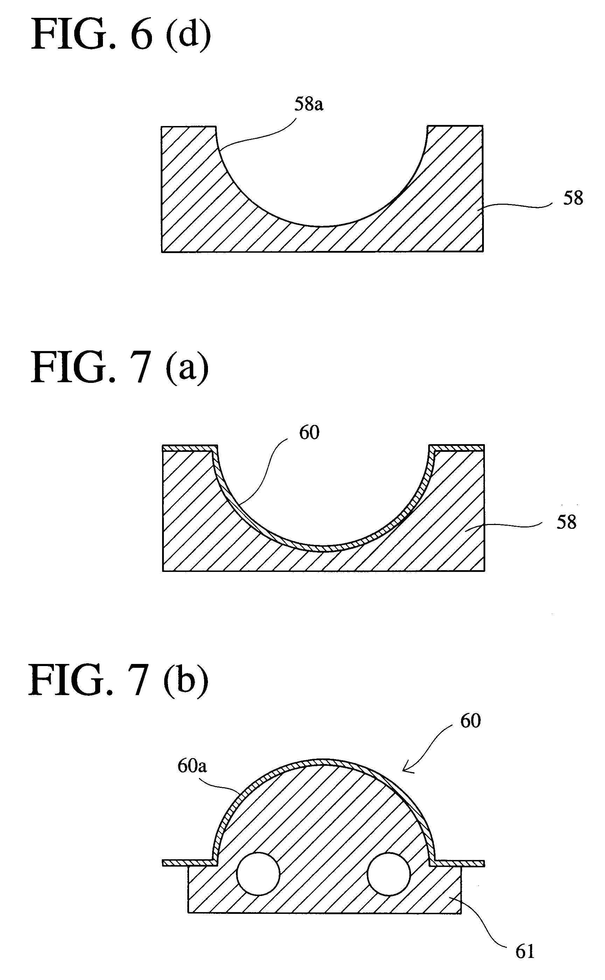

A typical example of a conventional method for producing a master mould is shown in Figs. 6-8. Referring to Fig. 6, a support member 52 is fixed to a base plate 51 made of aluminum, etc. and is covered with gypsum 53 (Fig. 6 (a)). After the gypsum 53 is solidified, the surface of the gypsum 53 is machined by a ball end mill 54 to produce a primary mould 55 having a surface contour exactly equal to that of an outer surface of a final fibre-reinforced plastic article (Fig. 6 (b)). The primary mould 55 is disposed in a box-shaped mould 56, into which gypsum 57 is poured (Fig. 6 (c)). After the gypsum 57 is solidified, it is taken out of the box-shaped mould 56 and the primary mould 55 is removed to leave a gypsum mould (secondary mould) 58 (Fig. 6 (d)). By these steps, the properties (contour, smoothness, etc.) of the outer surface of the fibre-reinforced plastic article are transferred to a concave surface 58a of the gypsum mould 58. It should be noted that timbers may be used instead of gypsum to form the primary mould 55 as a wood mould.

Since the gypsum mould 58 has an extremely different thermal expansion coefficient from that of a fibre-reinforced plastic, it cannot be used as a master mould. Accordingly, it is necessary to manufacture a master mould of fibre-reinforced plastic from the gypsum mould 58. For this purpose, a plurality of layers of reinforcing fibre fabrics are stacked one by one on a concave surface 58a of the gypsum mould (secondary mould) 58 and impregnated with a hardening resin (wet layup step, as shown in Fig 7 (a)). The master mould 60 composed of a hardened fibre-reinforced plastic has an outer surface having the same contour as that of the final article. Namely, the properties of the machined surface of the gypsum mould is transferred to a master mould 60 of the fibre-reinforced plastic. Fig. 7 (b) shows the master mould 60 supported by a suitable support member 61.

However, since the convex surface 60a of the master mould 60 constitutes a forming surface (having good surface properties), it is necessary to form a concave mould (tool mould) to which the properties of the convex surface 60a of the master mould 60 are transferred. In other words, it is also necessary to produce a reverse mould.

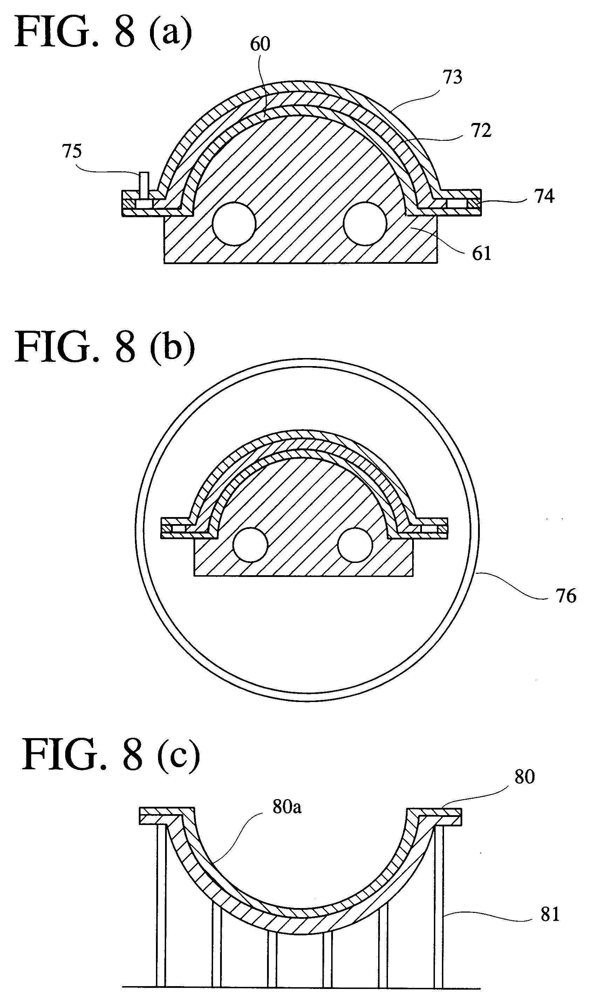

Figs. 8 (a)-(c) show the steps of manufacturing a tool mould, as a reverse mould. First, as shown in Fig. 8 (a), a plurality of prepregs of fibre-reinforced plastics are disposed on the surface of a fibre-reinforced plastic article-forming mould 60 supported by support member 61, and covered by a heat-resistant bagging film 73 and sealed with a heat-resistant sealer 74. By suction through a suction opening 75, the inside of the bagging film 73 is evacuated. In the assembled state, the mould 60 is placed in an autoclave 76 and heated under pressure to harden the prepregs as shown in Fig. 8 (b). The fibre-reinforced plastic article 80 thus obtained has good surface properties and can be supported by a suitable support member 81 for use as a concave mould as shown in Fig. 8 (c).

In addition to the above gypsum moulding method, there is known a method for forming a master mould from blocks of an epoxy resin, a phenol resin, etc. In this method, the blocks are stacked and the entire surface of the integrally stacked blocks is machined to obtain the same contour as that of the final article.

This method has its advantages in that it can form a fibre-reinforced plastic article-forming mould directly from a master mould.

However, the above conventional method for producing a fibre-reinforced plastic article using gypsum or wood as a mould material has its disadvantages in that three types of moulds including a reverse mould should be manufactured, which makes the entire process very lengthy and complicated, and in that storing a gypsum mould in good conditions is very difficult because it must be stored at constant temperature and pressure.

Also, the shrinkage, expansion, deformation, etc. of the gypsum mould makes the dimensions of the master mould inaccurate. Further, since coating and casting processes of gypsum are needed in the conventional method, working conditions are likely to become unsatisfactory. In the case of using resin blocks, not only are material costs high, but the resin blocks are slightly deformed when heated during the process of forming a fibre-reinforced plastic article. Also, since resins have thermal expansion coefficients of 30x10⁻⁶/°C to 40x10⁻⁶/°C, which are larger than those of fibre-reinforced plastics (5x10⁻⁶/°C to 7x10⁻⁶/°C), dimensional accuracy decreases drastically particularly when large articles are moulded.

Viewed from a first aspect of the present invention, there is provided a mould for forming a fibre-reinforced plastic article comprising an easily machinable ceramic material having substantially the same thermal expansion coefficient as that of said fibre-reinforced plastic, wherein at least a surface layer of said mould is substantially fluid-tight.

Viewed from a second aspect of the present invention, there is provided a method of making a mould for forming a fibre-reinforced plastic article, comprising the steps of: machining the surface of an easily machinable ceramic material to the contours of the fibre-reinforced plastic article to be formed; impregnating the machined surface of said ceramic material with a hardening resin; and hardening said resin to form a substantially fluid-tight, dense layer.

The above method may be used to form a master mould, from which tool moulds may be formed to mould the particular fibre-reinforced plastic articles. These tool moulds are preferably themselves made from fibre-reinforced plastics. Alternatively, if the shape of the master mould permits, fibre-reinforced plastic articles can be moulded directly therefrom.

Thus, viewed from a third aspect of the present invention, there is provided a master mould for forming a fibre-reinforced plastic article-forming mould, said master mould comprising an easily machinable ceramic material having substantially the same thermal expansion coefficient as that of said fibre-reinforced plastic, at least a surface layer of said master mould being substantially fluid-tight.

Viewed from a fourth aspect of the the present invention, there is provided a method of making a master mould for forming a fibre-reinforced plastic article-forming mould, comprising the steps of: machining a surface of an easily machinable ceramic material to the contours of the fibre-reinforced plastic article to be formed; impregnating the machined surface of said ceramic material with a hardening resin; and hardening said resin to form substantially fluid-tight, dense layer.

It has been found that by using an easily machinable model material having substantially the same thermal expansion coefficient as that of the fibre-reinforced plastic, and by machining the entire surface of the model material and impregnating it with a hardening resin, it is possible to obtain a mould having a good fluid tightness.

The invention also extends to methods of making fibre-reinforced plastic articles, using the moulds or master moulds described herein.

Some preferred embodiments of the present invention will now be described by way of example only and with reference to the accompanying drawings, in which:-
Fig. 1 (a) is a schematic perspective view showing a frame member supporting model blocks in the process of producing a large master mould in accordance with a preferred embodiment the present invention;
Fig. 1 (b) is a schematic perspective view showing model blocks stacked on the frame member;
Fig. 1 (c) is a cross-sectional view showing the model blocks stacked on the frame member;
Fig. 2 (a) is a cross-sectional view showing the step of machining the entire surface of the resultant model block stack in accordance with the preferred method of producing a master mould;
Fig. 2 (b) is a cross-sectional view showing the step of impregnating a surface layer of the resultant model block stack with a hardening resin to form a dense layer;
Fig. 3 (a) is a cross-sectional view showing model blocks stacked in the process of producing a small master mould in accordance with a preferred embodiment of the present invention;
Fig. 3 (b) is a cross-sectional view showing the step of machining the entire surface of the resultant model block stack;
Fig. 3 (c) is a cross-sectional view showing the step of impregnating a surface layer of the resultant model block stack with a hardening resin to form a dense layer;
Fig. 4 (a) is a schematic perspective view showing prepregs and a bagging film laid on a master mould to produce a fibre-reinforced plastic article-forming mould;
Fig. 4 (b) is a cross-sectional view showing the prepregs and the bagging film laid on the master mould;
Fig. 5 (a) is a cross-sectional view showing model blocks stacked on a frame member to produce a fibre-reinforced plastic article-forming mould in accordance with a preferred embodiment of the present invention;
Fig. 5 (b) is a cross-sectional view showing the step of machining the entire surface of the resultant model block stack;
Fig. 5 (c) is a cross-sectional view showing the step of impregnating a surface layer of the resultant model block stack with a hardening resin to form a dense layer;
Fig. 6 (a) is a cross-sectional view showing gypsum mounted on a base member to produce a conventional master mould;
Fig. 6 (b) is a cross-sectional view showing the step of machining the surface of the gypsum;
Fig. 6 (c) is a cross-sectional view showing the step of pouring gypsum into a box-shaped mould in which the surface-machined gypsum mould is disposed;
Fig. 6 (d) is a cross-sectional view showing the resultant gypsum mould;
Fig. 7 (a) is a cross-sectional view showing fabrics of reinforcing fibres wet-laid up on the surface of the gypsum mould to produce a conventional master mould;
Fig. 7 (b) is a cross-sectional view showing a master mould composed of a fibre-reinforced plastic;
Fig. 8 (a) is a cross-sectional view showing prepregs and a bagging film laid on the master mould to produce a conventional fibre-reinforced plastic article-forming mould;
Fig. 8 (b) is a cross-sectional view showing the master mould covered by the prepregs and the bagging film which is disposed in an autoclave; and
Fig. 8 (c) is a cross-sectional view showing the resultant fibre-reinforced plastic article-forming mould (tool mould).

### [1] Master Mould ⇒ Forming Mould ⇒ Moulded Article

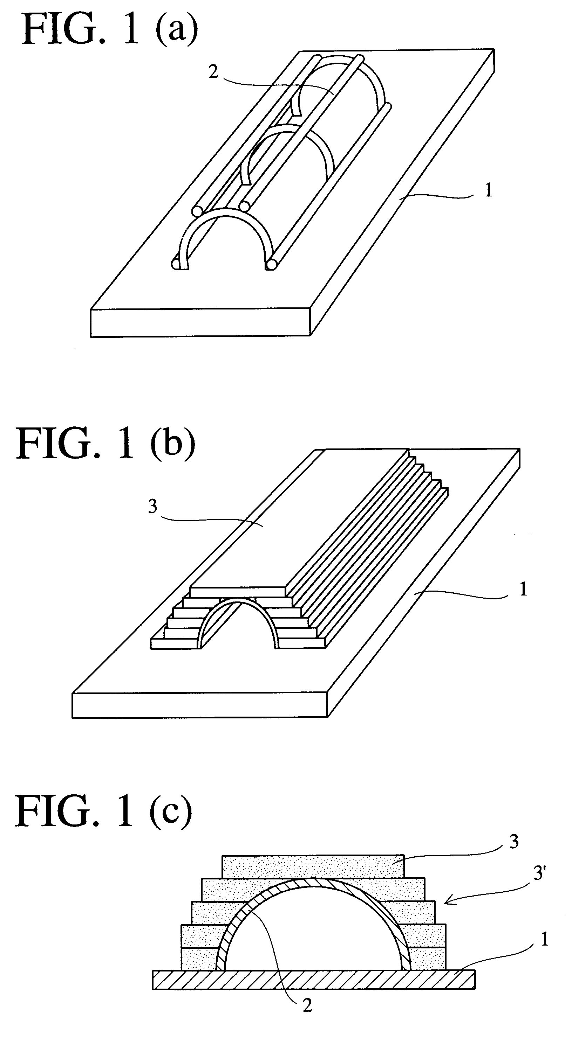

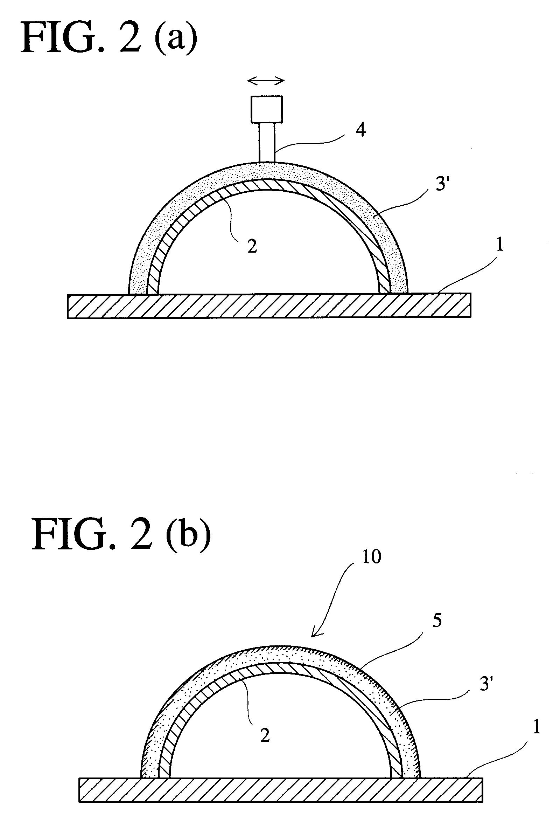

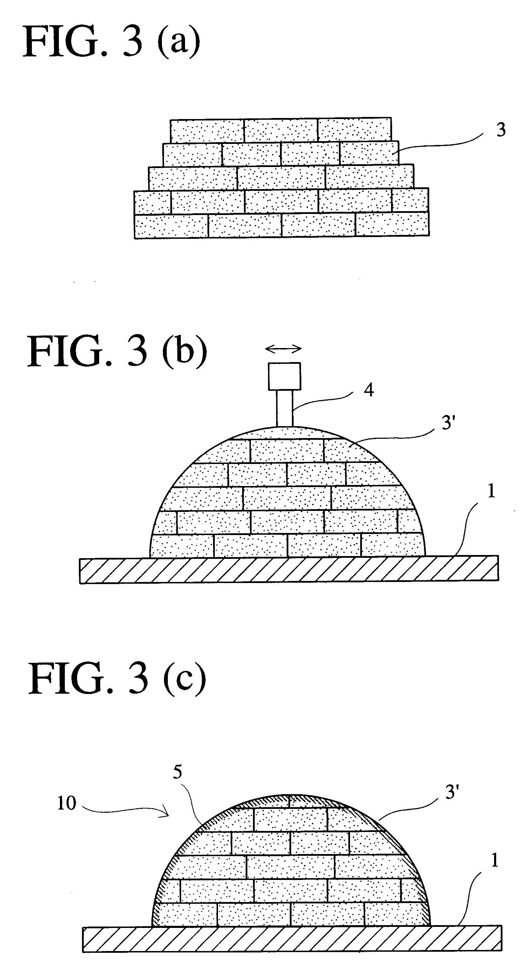

A model material is first machined to a surface contour of a final article to produce a master mould, which is in turn used as a reverse mould for producing a forming mould for use in the production of a fibre-reinforced plastic article.
(1.1) Structure of the Master Mould
   The preferred master mould of the present invention comprises a model material of easily machinable ceramics having substantially the same thermal expansion coefficient (about 5x10⁻⁶/°C to about 9x10⁻⁶/°C) as that of fibre-reinforced plastics and good heat resistance. Such easily machinable ceramics may preferably be a calcium silicate-based ceramic composition containing reinforcing fibres and a binder resin. The preferred reinforcing fibres include short glass fibres, carbon fibres, aramide fibres, etc., and the preferred binder resins include rubbers such as styrene-butadiene rubber (SBR), etc., thermosetting resins, etc. Because of the reinforcing fibres and the binder resin, the ceramic material does not crack during machining, showing good durability when used as a model material.
   Since this ceramic material contains a lot of cells (pores), its surface layer should be turned into a dense layer by impregnation with a hardening resin. If cells remain in the ceramic material, an evacuation treatment cannot be conducted after covering with a bagging film, which means that this densification treatment is indispensable. The impregnating resins may be any resins hardenable at elevated temperatures or at a room temperature, preferably epoxy resins, phenol resins, urethane resins, polyester resins, etc. The hardening resin-impregnated layer (dense layer) preferably has a depth of about 5 mm to keep sufficient fluid tightness. Since the dense layer constitutes a forming surface of the master mould, it should be concave when the master mould is a concave mould, or convex when the master mould is a convex mould. This dense layer provides sufficient fluid tightness, thereby enabling an effective evacuation treatment after covering with a bagging film.
(1.2) Production of the Master Mould
   Two preferred methods for producing a master mould will be explained below:
   (i) Large Master Mould
      Commercially available model blocks made of calcium silicate may be stacked to form an original mould (starting mould). For this purpose, a frame member 2 for supporting the original mould is fixed to a base plate 1 of aluminum, etc. as shown in Fig. 1 (a). The frame member 2 may be made of any materials such as steel, aluminum, etc., as long as it can serve as a supporting means.
      The model blocks 3 are stacked on the frame member 2, and adjacent model blocks 3 are bonded together by a heat-resistant adhesive (such as epoxy resins) (Fig. 1(b)). Fig. 1 (c) shows one example of how model blocks are stacked on the frame member 2 to form a model block stack 3'. As described below, the model blocks 3 and the frame member 2 show differing thermal expansions during the heat-pressing process of the fibre-reinforced plastic. If the model blocks 3 and the frame member 2 are strongly fixed together, the model blocks 3 would be deformed. Accordingly, the model blocks 3 should be supported by the frame member 2 in a floating manner which provides a "floating structure". The floating structure means a structure in which the model blocks 3 are movable relative to the frame member 2 in both radial and longitudinal directions. With this floating structure, the model blocks are not deformed at all during the heat-pressing process of the fibre-reinforced plastics.
      Next, the entire surface of the resultant model block stack 3' is machined to a predetermined contour by a tool 4 such as a ball end mill, etc. as shown in Fig. 2 (a). The machined model block stack 3' is impregnated with a hardening resin such as an epoxy resin, etc. in its surface layer, to form a dense layer 5 having good fluid tightness (see Fig. 2 (b)). The master mould 10 thus obtained having the above structure has a heat resistance of 100°C or higher, particularly 150°C or higher.
   (ii) Small Master Mould
      In the case of a small master mould, the model blocks 3 need only be stacked and bonded together by a heat-resistant adhesive as shown in Fig. 3 (a). As in the large master mould, the resultant model block stack 3' is machined to a predetermined contour by a tool 4 such as a ball end mill, etc. (see Fig. 3 (b)). The machined model block stack 3' is impregnated with a hardening resin such as epoxy resin, etc. in its surface layer, to form a dense layer 5 (see Fig. 3 (c)).
(1.3) Production of the Fibre-reinforced Plastic Article-forming Mould (Tool Mould)

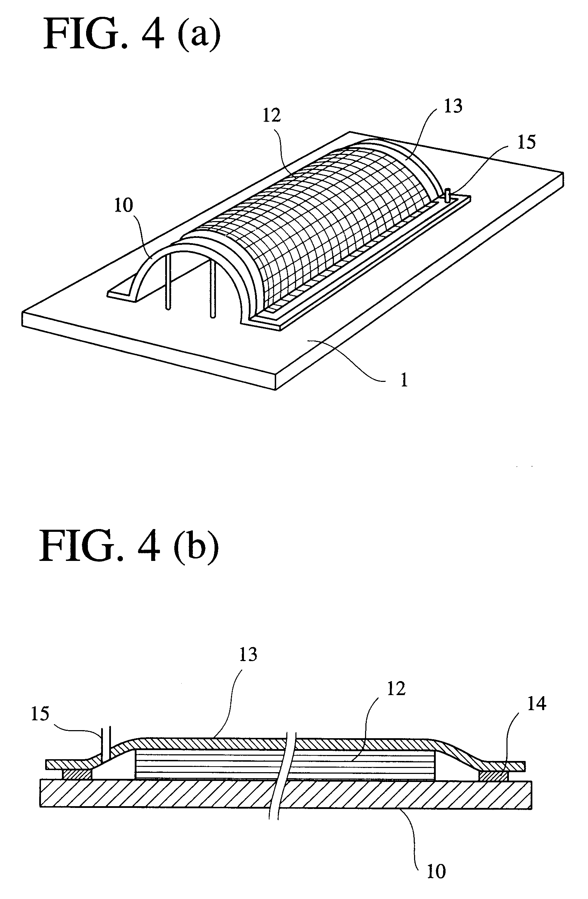

   Figs. 4 (a) and (b) show examples of stages during the production of a fibre-reinforced plastic article-forming mould using a master mould. The forming mould is produced from the same fibre-reinforced plastic as that of the final fibre-reinforced plastic article. After applying a release agent to the surface of the master mould 10 disposed on the base plate 1, a plurality of prepregs 12 for manufacturing the fibre-reinforced plastic article-forming mould are laid on the master mould 10. Each prepreg 12 comprises reinforcing fibres and a thermosetting matrix resin. In this case, sufficient space should be provided around the stacked prepregs. Incidentally, the reinforcing fibres may be usual long, reinforcing fibres such as carbon fibres, aramide fibres, glass fibres, boron fibres, etc. The thermosetting matrix resins may be epoxy resins, polyester resins, phenol resins, etc.
   The prepregs 12 disposed on the master mould 10 are completely covered by a bagging film 13, and the periphery of the bagging film 13 is fluid-tightly sealed to the master mould 10 by a heat-resistant sealer 14. In this state, the evacuation of the bagging film 13 is conducted through a suction opening 15. This assembly is placed in an autoclave and subjected to a high pressure while it is heated. The autoclave is at a temperature of preferably between room temperature and 180°C and a pressure of preferably between 200 kPa to 700 kPa.
   Once the resin in the fibre-reinforced plastic has completely hardened, the bagging film 13 is removed to obtain a forming mould. In this embodiment, since the master mould 10 is a convex mould (having a convex forming surface), the resultant forming mould is a concave mould (having a concave forming surface).
(1.4) Production of a Fibre-reinforced Plastic Article
   The method for producing a fibre-reinforced plastic article is substantially the same as the method for producing a fibre-reinforced plastic article-forming mould. That is, a plurality of prepregs of a fibre-reinforced plastic are disposed on a concave surface of the forming mould and completely covered by a bagging film. After sealing, the inside of the bagging film is evacuated, and the assembly is subjected to a high pressure while it is heated. The temperature and pressure of the autoclave may be the same as described above. The fibre-reinforced plastic article thus obtained has a good appearance because its outer surface is in contact with the forming surface of the mould.

### [2] Forming Mould ⇒ Moulded Article

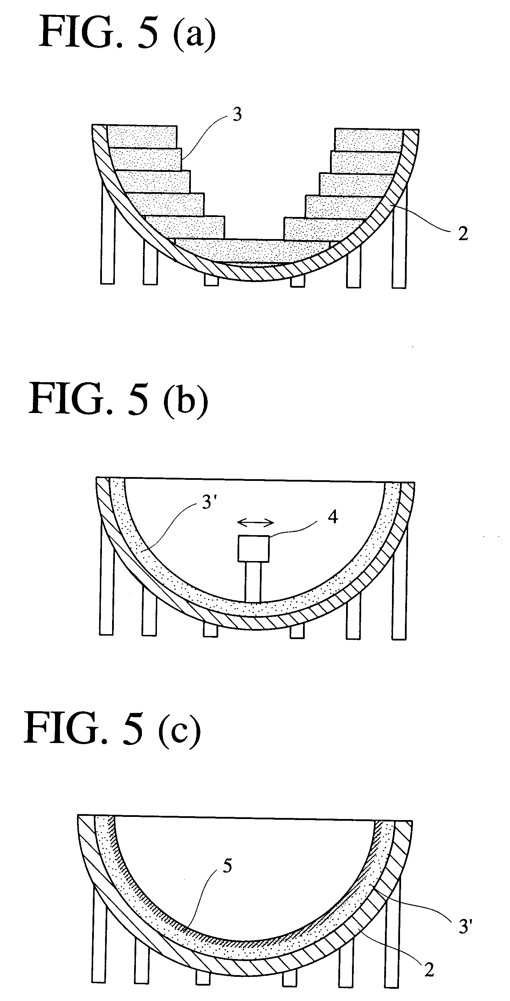

Model blocks are machined to directly produce a forming mould which is a reverse mould for a fibre-reinforced plastic article, and the fibre-reinforced plastic article is produced by using this forming mould.
(2.1) Forming Mould
   The model blocks 3 are stacked on the frame member 2, and adjacent model blocks 3 are bonded together by a heat-resistant adhesive (see Fig. 5 (a)). The model blocks 3 are supported by the frame member 2 in a floating manner (giving a floating structure). Next, the entire surface of the resultant model block stack 3' is machined to a predetermined contour of a final fibre-reinforced plastic article by a tool 4 such as a ball end mill, etc. as shown in Fig. 5 (b). The machined model stack 3' is impregnated with a hardening resin such as an epoxy resin, etc. in its surface layer, to form a dense layer 5 having good fluid tightness (see Fig. 5 (c)). Thus, the forming mould can be obtained directly from the model blocks 3. Because of the dense layer 5, the resultant forming mould shows good fluid tightness and durability.
(2.2) Production of the Fibre-reinforced Plastic Article
   The fibre-reinforced plastic article may be produced in the same manner as in [1]. That is, a plurality of prepregs of fibre-reinforced plastic are disposed on a concave surface of the forming mould, and completely covered by a bagging film. After sealing, the bagging film is evacuated and pressed while heating in an autoclave. The fibre-reinforced plastic article thus obtained shows a good appearance because its outer surface is in contact with the forming surface of the forming mould.
   A preferred embodiment of the present invention will be explained in further detail by the following Example, which is not intended to restrict the scope of the present invention.

### Example 1

Using easily machinable xonotlite blocks (CaSiO₃ + glass fibres + SBR, "Pearl Board" available from Onoda K. K.) having a thermal expansion coefficient of 6.5x10⁻⁶/°C and heat resistance of 200°C or higher as model blocks, the model blocks were stacked with adjacent ones bonded together by an epoxy resin. The stacked blocks are NC-machined to a predetermined shape by a ball end mill to provide a semicircular original mould of 2.9 m in a longitudinal direction and 1.8 m in a radial direction.

The surface of the original mould was impregnated with a heat-resistant epoxy resin and hardened at a room temperature to obtain a master mould. The microscopic observation of the master mould having an impregnated surface portion revealed that the impregnated dense layer extended as deep as about 5 mm from the surface, and that the impregnated surface was extremely dense. Also, a leak test on test pieces produced from the same materials by the same method showed that no leak was observed at all for 5 minutes. With test pieces not impregnated with an epoxy resin, pressures different from atmospheric disappeared within 5 minutes.

When the master mould was kept at 100°C, the difference in thermal expansions between the model blocks and the frame member was about 2 mm, but there was no deformation in the model blocks at all because the model blocks were connected to the frame member in a floating structure.

As shown in Fig. 4 (a), a plurality of prepregs of carbon fibre cloths impregnated with a thermosetting epoxy resin (Tool Light available from Mitsubishi Chemical Corporation) were mounted on the master mould which was given a scratch line for a transfer test, and covered by a bagging film. After sealing, the inside of the bagging film was evacuated. In the assembled state, they were placed in an autoclave and kept at 96±3°C and 7 kg/cm² for 6 hours to produce a tool mould of a fibre-reinforced plastic.

With this tool mould, a fibre-reinforced plastic article was manufactured under the same conditions as above. The resultant fibre-reinforced plastic article was observed with respect to a line transferred form the scratch line on the master mould. As a result, it was found that the transferred line on the fibre-reinforced plastic article had only deviated by less than 0.5 mm from a position corresponding to the scratch line on the master mould.

The present invention has been described above referring to the drawings attached hereto, but it should be noted that it is not restricted thereto, and that modifications may be made. For instance, by making the master mould as a concave mould, ie. opposite to the above Example, the forming mould may then be formed as a convex mould, thereby producing a fibre-reinforced plastic article having an inner surface with good smoothness and dimensional accuracy. Also, instead of using prepregs for the forming mould and the fibre-reinforced plastic article, cold-setting resins may be used in a wet layup method, but the best effects can be obtained, in accordance with preferred embodiments of the present invention, when the prepregs are heated under pressure.

As described above in detail, the master mould comprises an easily machinable ceramic material having substantially the same thermal expansion coefficient as that of fibre-reinforced plastic. Hence, bonded model blocks of the ceramic material need only be machined and impregnated with a hardening resin to provide the mould with a dense surface layer. Also, since the surface layer of the master mould is turned into a dense layer having good fluid tightness, prepregs for fibre-reinforced plastics may be mounted to the master mould without any pretreatment, and it may be covered by a bagging film and evacuated. Further, since the master mould is thermally stable, it can keep sufficient dimensional accuracy even after being exposed to a heating cycle, showing sufficient durability for manufacturing a plurality of tool moulds. Accordingly, fibre-reinforced plastic articles may be efficiently produced at a low cost.

Thus, in at least in the illustrated embodiments, the present invention provides a mould for forming a fibre-reinforced plastic article and a master mould both having substantially the same thermal expansion coefficient as that of the fibre-reinforced plastic; further, there is provided a method for producing such a mould for forming a fibre-reinforced plastic article and a master mould without any complicated steps.

## Claims

1. A mould for forming a fibre-reinforced plastic article comprising an easily machinable ceramic material (3') having substantially the same thermal expansion coefficient as that of said fibre-reinforced plastic, wherein at least a surface layer (5) of said mould is substantially fluid-tight.

2. A master mould for forming a fibre-reinforced plastic article-forming mould, said master mould comprising an easily machinable ceramic material (3') having substantially the same thermal expansion coefficient as that of said fibre-reinforced plastic, at least a surface layer (5) of said master mould being substantially fluid-tight.

3. A mould or a master mould as claimed in claim 1 or 2, wherein said ceramic material (3') comprises calcium silicate, reinforcing fibres and a binder resin.

4. A mould or a master mould as claimed in claim 1, 2 or 3, wherein said surface layer (5) of said easily machinable ceramic material (3') is impregnated with a hardening resin which is hardened to form said substantially fluid-tight, dense layer (5).

5. The mould or a master mould as claimed in any preceding claim, wherein said ceramic material (3') is supported by a frame member (2) in a floating manner.

6. A method of making a mould (10) for forming a fibre-reinforced plastic article, comprising the steps of: machining the surface of an easily machinable ceramic material (3') to the contours of the fibre-reinforced plastic article to be formed; impregnating the machined surface of said ceramic material with a hardening resin; and hardening said resin to form a substantially fluid-tight, dense layer (5).

7. A method of making a master mould (10) for forming a fibre-reinforced plastic article-forming mould, comprising the steps of: machining a surface of an easily machinable ceramic material (3') to the contours of the fibre-reinforced plastic article to be formed; impregnating the machined surface of said ceramic material with a hardening resin; and hardening said resin to form substantially fluid-tight, dense layer (5).

8. A method of making a fibre-reinforced plastic article, using the mould or master mould as claimed in any of claims 1 to 5.

9. A method of making a fibre-reinforced plastic article, comprising the steps of: making a mould (10) as claimed in claim 6; applying a plurality of layers of pre-impregnated fibre sheets (12) to the dense surface layer (5) of the mould, covering with a bagging film (13) and hermetically sealing the bagging film to the mould; evacuating the bagging film and placing the mould in an autoclave; allowing the reinforcing plastic of the pre-impregnated fibre sheets to harden to form a fibre-reinforced plastic article; and removing the article from the mould.

10. A method as claimed in any of claims 6 to 9, wherein said ceramic material (3') is formed by bonding blocks of the ceramic material (3) together with a heat-resistant adhesive.
